# EUROPÄISCHE PATENTSCHRIFT

(11) **EP 0 515 719 B1**
(45) Veröffentlichungstag und Bekanntmachung des Hinweises auf die Patenterteilung: **15.03.1995**
(21) Anmeldenummer: 91108898.7
(22) Anmeldetag: 31.05.1991
(51) Int. Cl.: C08F 20/12, C09J 133/06, C09J 7/02

(54) **Selbstklebende Acrylat-Copolymere, Verfahren zu deren Herstellung, und selbstklebende Flächengebilde, die diese enthalten**
Self-adhesive acrylat copolymers, process for their preparation and self-adhesive flat items containing them
Copolymères d'acrylates auto-adhésifs, procédé de leur préparation et objets plats auto-adhésifs les contenants

(43) Veröffentlichungstag der Anmeldung: 02.12.1992
(73) Patentinhaber: Sellotape AG, CH-9400 Rorschach (CH)
(72) Erfinder: Knudsen, Hans, Dipl.-Chem., CH-9400 Rorschach (CH); Meyer, Wolfgang, Dr. Dipl.-Chem., C-9400 Rorschach (CH)
(74) Vertreter: Hansen, Bernd, Dr. Dipl.-Chem.

(56) Entgegenhaltungen:
- US-A- 3 691 140

## Beschreibung

Diese Erfindung betrifft selbstklebende Acrylat-Copolymere, ein Verfahren zu deren Herstellung sowie eine besonders günstige Verwendung dieser Acrylat-Copolymere.

Selbstklebende Substanzen oder auch Haftklebstoffe stellen permanent-klebrige Stoffe dar, die an vielen Oberflächen unterschiedlicher Materialien bereits bei leichtem Andruck spontan haften. Derartige Haftklebstoffe werden fast ausschließlich zur Beschichtung von Flächengebilden, wie Papier- oder Folienbänder, Haftetiketten oder selbstklebende Dekorfolien verwendet. Wichtige Eigenschaften der Haftklebestoffe stellen beispielsweise das Haftvermögen, die Wärme-, Alterungs- und Weichmacherbeständigkeit dar.

Aus der US-PS 3 691 140 sind klebrige elastomere Acrylat-Copolymere in Form von Mikrokugeln bekannt. Diese Mikrokugeln werden durch wässrige Suspensionspolymerisation hergestellt. Die nach der Polymerisation erhaltenen Mikrokugeln werden in Lösungsmitteln dispergiert, wodurch Suspensionen erhalten werden. Nach dem Auftragen einer solchen Suspension auf ein zu beschichtendes Flächengebilde wird das Lösungsmittel abgedunstet, so daß auf dem Flächengebilde ein Überzug aus diesen Acrylat-Copolymer-Mikrokugeln entsteht. Dieser Überzug hat eine Klebewirkung, so daß die so beschichteten Flächengebilde beispielsweise zum Abdecken oder Schutz von empfindlichen Oberflächen verwendet werden können. Es ist zudem auch wünschenswert, daß diese beschichteten Flächengebilde wiederholt verwendet und von einer zu schützenden Oberfläche wiederholt entfernt werden können, ohne daß dies die Haft- bzw. Klebeigenschaften nachteilig beeinflußt. Nachteilig bei dieser bekannten Art von Copolymeren ist jedoch, daß die Klebeeigenschaften mit der Zeit nachlassen, so daß schließlich überhaupt keine Haftung mehr erzielt werden kann. Dies erfolgt aufgrund einer Wanderung der Mikrokugeln von dem Flächengebilde, auf dem sie aufgetragen sind, zu der Oberfläche hin, die mit dem selbstklebenden Flächengebilde bedeckt ist.

Aus diesem Grund wurde diese Art der Haftstoffe gemäß US-PS 3 857 731 (bzw. die entsprechende DE-PS 24 17 312) so weiterentwickelt, daß zusätzlich zu den Mikrokugeln aus Acrylat-Copolymer eine Bindemittelschicht auf einem zu beschichtenden Flächengebilde vorgesehen wird. Diese Mikrokugeln enthaltende Bindemittelschicht wird derart aufgebracht, daß ein Teil der Mikrokugeln aus der Bindemittelschicht herausragt und somit mit einem entsprechenden Material, das zur Haftung gebracht werden soll, in Kontakt gelangen kann.

Der Erfindung lag daher die Aufgabe zugrunde, ein Acrylat-Copolymer vorzuschlagen, das gute und lang andauernde Hafteigenschaften aufweist. Diese sollen sich insbesondere selbst dann nicht nachteilig ändern, wenn ein wiederholtes Anhaften und Entfernen von zu befestigenden Materialien vorgenommen wird. Außerdem soll ein Verfahren angegeben werden, mit dem derartige Acrylat-Copolymere auf einfache Art und Weise hergestellt werden können.

Diese Aufgabe wird erfindungsgemäß dadurch gelöst, daß ein Acrylat-Copolymer vorgeschlagen wird, welches durch eine kombinierte Suspensions- und Emulsionspolymerisation von Acryl-Monomeren mit gegebenenfalls zusätzlichen copolymerisierbaren Monomeren herstellbar ist. Überraschenderweise hat sich herausgestellt, daß derartig hergestellte Acrylat-Copolymere die gewünschten Eigenschaften aufweisen, daß sie einerseits die Selbstklebewirkung (Haftklebrigkeit) haben und daß andererseits eine derartige Wirkung auch lange anhält und nicht verlorengeht, wenn damit beschichtete Produkte mehrfach zum Anhaften gebracht und wieder entfernt werden.

Die Acrylat-Copolymere eignen sich vorzugsweise zur Herstellung von selbstklebenden Flächengebilden, das aus einem Substrat besteht und beispielsweise Papier oder Folien darstellt. Das Acrylat-Copolymer wird dazu auf ein zu beschichtendes Flächengebilde aufgetragen, wodurch ein Überzug aus diesem selbstklebenden Acrylat-Copolymer gebildet wird. Es erfolgt auch nach mehrfacher Verwendung dieses so beschichteten Flächengebildes keine Wanderung des Acrylat-Copolymers von der Materialoberfläche weg zu dem Material, mit dem eine Haftung erzielt werden soll.

Das Acrylat-Copolymer, das durch die kombinierte Suspensions- und Emulsionspolymerisation herstellbar ist, liegt in Form von gröberen und in Form von feinen Teilchen vor. Die gröberen Teilchen haben eine durchschnittliche Teilchengröße von 5-50 »m, und die feinen Teilchen haben eine von weniger als 0,5 »m, vorzugsweise weniger als 0,2 »m.

Der Anteil in Gewichtsprozent des Copolymers in Form der gröberen Teilchen übersteigt den der feinen Teilchen. Das Verhältnis von gröberen zu feinen Teilchen ist 1 zu 0,1-0,6. Dadurch kann eine gute Haftung des Copolymers einerseits mit einem Flächengebilde,
das mit diesem Copolymer beschichtet ist,
und andererseits auch mit einem anderen Substrat erzielt werden, das mit diesem beschichteten Flächengebilde in Kontakt gebracht ist.

Das Acrylat-Copolymer wird durch eine Kombination aus Suspensions- und Emulsionspolymerisation von Acryl-Monomeren gegebenenfalls mit zusätzlichen copolymerisierbaren Monomeren hergestellt. Vorzugsweise wird zunächst eine reine Suspensionspolymerisation und anschließend eine Emulsionspolymerisation durchgeführt. Die Suspensionspolymerisation kann aber weiterlaufen, während die Emulsionspolymerisation als begleitende Polymerisation gestartet wird. In diesem Fall laufen dann beide Polymerisationsarten nebeneinander ab.

Bei der Suspensionspolymerisation werden die Ausgangsmonomeren unter Mitverwendung geeigneter Emulgatoren in Wasser fein verteilt. Zur Polymerisation werden öllösliche Initiatoren verwendet, die in Wasser nur schwer löslich sind. Die Initiatoren sind dabei in den in Wasser ebenfalls schwer löslichen Monomertröpfchen gelöst. Als Initiatoren eigenen sich besonders organische Peroxide, beispielsweise Dilauroylperoxid oder Dibenzoylperoxid. Die Polymerisation läuft nach einem Radikalmechanismus ab. Je nach Auswahl der verwendeten Emulgatoren, der Rührgeschwindigkeit oder der Temperatur erhält man bei diesen Verfahren kleinere oder größere in Wasser dispergierte polymere Mikrokugeln.

Als Monomere eignen sich solche auf Acrylbasis, beispielsweise Acrylsäure und Methacrylsäure, sowie deren Derivate oder Mischungen davon. Als Derivate kommen bevorzugt Ester, Amide, Acrylsäurenitril und deren Gemische in Betracht. Ein bevorzugtes Gemisch umfaßt Acrylsäure sowie mindestens eine (Meth)Acrylsäureesterkomponente, deren Alkohol mindestens 4C-Atome aufweist. Es ist besonders günstig, wenn die Alkoholkomponente des Esters 4-12C-Atome aufweist. Beispielhaft seien n- und iso-Butylacrylat, iso-Octylacrylat, 2-Ethyl-hexylacrylat, Laurylacrylat genannt. Als weitere monomere Ester zur Modifikation der Klebereigenschaften, z.B. Kleberhärte bzw. -weichheit, Vernetzung, Kleberpolarität, können auch noch tert.-Butylacrylat, Hydroxyethylacrylat, Methylmethacrylat, Hydroxypropylmethacrylat, Ethylenglykoldimethacrylat oder Glycidylmethacrylat in kleinen Mengen zugesetzt werden.

Diese Monomeren können miteinander vermischt werden, so daß durch die Polymerisation die gewünschten Copolymere hergestellt werden. Es ist aber ebenso möglich, andere geeignete Monomere mitzuverwenden. Besonders geeignet als zusätzliche copolymerisierbare Monomere sind beispielsweise Vinylester, Vinylether, Maleinsäurederivate, Fumarsäurederivate und Itaconsäurederivate. Hiervon seien Vinylacetat, Vinylpropionat, Vinylalkylether, Vinylhydroxybutylether, Maleinsäureanhydrid sowie Halb- und Diester der Maleinsäure besonders bevorzugt genannt. Der Anteil an zusätzlichem copolymerisierbaren Monomer liegt vorzugsweise bei bis zu 35 Gew.% der Gesamt-Monomeren.

Die als Ausgangsmaterial verwendeten Monomeren werden zusammen mit einem geeigneten Initiator in ein Reaktionssystem gegeben, das hauptsächlich Wasser und dazu noch geeignete Emulgatoren enthält. Unter Stickstoffatmosphäre wird dann die Suspensionspolymerisation bei erhöhter Temperatur, vorzugsweise ca. 50°C, gestartet, wobei die Temperatur während der Reaktion in einem Bereich von etwa 50 bis 85°C, vorzugsweise bei etwa 70°C, liegt. Diese Suspensionspolymerisation wird für eine Dauer von 1 bis 2 Stunden, vorzugsweise etwa 1,5 Stunden, durchgeführt.

Anschließend wird die Emulsionspolymerisation in diesem Reaktionssystem gestartet, indem ein wasserlöslicher Initiator zu der Reaktionsmischung zugegeben wird, der in den in Wasser schwer löslichen Monomertröpfchen nicht löslich ist. Vorzugsweise werden hierfür anorganische Peroxidverbindungen eingesetzt, beispielsweise Ammonium- oder Kaliumpersulfat.

Zu Beginn der Emulsionspolymerisation werden vorzugsweise die gleichen Monomeren erneut zu der Reaktionsmischung hinzugegeben, die bereits für die im ersten Schritt durchgeführte Suspensionspolymerisation verwendet wurden. Die Zugabe von Monomeren und Initiator erfolgt vorzugsweise während einer längeren Zeitspanne, vorteilhaft z.B. innerhalb von etwa 4 Stunden. Die Emulsionspolymerisation wird bei der gleichen Temperatur wie die Suspensionspolymerisation durchgeführt. Die Dauer der Emulsionspolymerisation beträgt 15 bis 20 Stunden, vorzugsweise etwa 16 Stunden.

Am Ende dieser Reaktion wird ein Produkt erhalten, das in Form einer Dispersion vorliegt. Die Feststoffgehalte können vorzugsweise im Bereich von 30-70, vorteilhaft 45-65 Gew.% liegen. Diese Dispersion kann als solche weiterverwendet werden. Es besteht aber auch die Möglichkeit, das Acrylat-Copolymer durch z.B. Methanolzugabe auszufällen und dann in Toluol oder Heptan zu dispergieren. Es ist auch die Möglichkeit gegeben, die Dispersion mit Lösungsmitteln zu versetzen und so eine Emulsion herzustellen.

Das so erhaltene Acrylat-Copolymer wird in Form von Dispersionen auf ein zu beschichtendes Flächengebilde aufgetragen. Das Flächengebilde umfaßt ein Substrat, das auf mindestens einer Seite mit dem Acrylat-Copolymer beschichtet wird. Nach dem Trocknen des Klebstoffes liegt die Schicht aus Acrylat-Copolymer im gewählten Raster z.B. in Punkt- oder Streifenform oder als vollflächiger Film auf dem Flächengebilde vor. Das trockene Auftragsgewicht beträgt etwa 3-20 g/m² für schwach-klebende Spezifikationen, zur Erzielung permanenter Haftung können erheblich höhere Auftragsgewichte Anwendung finden, z.B. im Bereich von 20-100 g/m².

Durch Anwendung des kombinierten Suspensions- und Emulsionspolymerisationsverfahrens ist es möglich, Acrylat-Copolymere zu erhalten, die sowohl in Form von gröberen Teilchen mit einer durchschnittlichen Teilchengröße im Bereich von 5 bis 50 »m als auch in Form von feinen bis sehr feinen Teilchen mit einer durchschnittlichen Teilchengröße im Bereich von kleiner 0,5 »m, insbesondere kleiner 0,2 »m vorliegen. Diese Verteilung kann aber durch Veränderung der Reaktionsbedingungen gezielt eingestellt werden.

Die Klebeeigenschaften der erhaltenen Acrylat-Copolymere können in Abhängigkeit von der Auswahl der Monomeren und deren erzielter Vernetzung beeinflußt werden. So ist es möglich, stark-klebende oder schwach-klebende Polymere zu erhalten. Schwach klebende Eigenschaften können auch dadurch erreicht werden, daß ein höherer Anteil gröberer Teilchen vorhanden ist, die nach der Auftragung auf ein Flächengebilde eine strukturierte Klebeoberfläche darstellen. Eine derartige strukturierte Klebeoberfläche ergibt die Möglichkeit der Herstellung wiederablösbarer selbstklebender Folien oder Papiere als Flächengebilde, die beispielsweise für einen temporären Schutz von empfindlichen Metall-, Kunststoff- oder Glasoberflächen verwendet werden können.

Durch die Anwendung des erfindungsgemäßen kombinierten Suspensions- und Emulsionspolymerisationsverfahrens werden Acrylat-Copolymere erhalten, die ohne das Erfordernis einer zusätzlichen Bindemittelschicht auf dem Flächengebilde direkt aufgebracht werden können. Außerdem weisen die erfindungsgemäß hergestellten Acrylat-Copolymere eine ausgezeichnete Klebeeigenschaft auf, die auch nach mehrmaliger Verwendung des selben beschichten Flächengebildes nicht nachläßt.

Nachfolgend wird das erfindungsgemäße Verfahren unter Bezugnahme auf Beispiele noch näher erläutert. Es wird je ein Beispiel für die Herstellung eines stark-klebenden und eines schwach-klebenden Acrylat-Copolymers angegeben.

### Beispiel 1: Herstellung eines stark-klebenden Acrylat-Copolymers

Es wird ein Monomerengemisch der folgenden Zusammensetzung hergestellt:

| | |
|---|---|
| Acrylsäure | 400 g |
| 2-Ethyl-hexylacrylat | 9600 g |
| Dodecylmercaptan | 2 g |
| Dilauroylperoxid | 16,5 g |

Ein Reaktionskolben wird mehrfach mit Stickstoff geflutet, um die Luft vollständig aus diesem System zu entfernen. Unter Stickstoffatmosphäre wird in diesem Reaktionskolben, der zusätzlich mit einem Thermometer und einem Tropftrichter ausgerüstet ist, die folgende Mischung vorgelegt:

| | |
|---|---|
| Wasser | 2000 g |
| Natrium-pyrophosphat | 5,6 g |
| Reaktionsprodukt aus 1 Mol Octylphenolpolyglykolether (z.B. Antarox CA 890 von GAF) und 1 Mol Maleinsäureanhydrid | 6 g |
| Natrium-Sulfobernsteinsäure-di-2-ethyl-hexylester (beispielsweise Disponil SUS IC8 von Henkel) | 74 g |
| Natrium-Vinylbenzolsulfonat | 3 g |

Zu dieser Mischung werden 1000 g des oben genannten Monomerengemisches unter Stickstoffatmosphäre mit Hilfe des Tropftrichters hinzugegeben. Die somit erhaltene Reaktionsmischung wird dann erwärmt, wobei bei etwa 50°C die Polymerisation anspringt. Dabei steigt die Temperatur auf ca. 70°C. Nach etwa 1 1/2 Stunden Reaktionszeit wird die nachfolgend beschriebene Mischung innerhalb von 4 Stunden ebenfalls unter Stickstoffatmosphäre hinzugegeben:

| | |
|---|---|
| Monomerengemisch (wie oben angeführt) | 9000 g |
| Wasser | 3330 g |
| Natrium-pyrophosphat | 33,3 g |
| Reaktionsprodukt aus 1 Mol Octylphenolpolyglykolether und 1 Mol Maleinsäureanhydrid | 300 g |
| Natrium-Sulfobernsteinsäure-di-2-ethylhexylester | 80 g |
| Natrium-Vinylbenzolsulfonat | 22,2 g |
| Kalium-persulfat | 2,6 g |

Während der Zugabe dieser Mischung wird die Temperatur auf etwa 70°C gehalten. Die Emulsionspolymerisation wird für eine Dauer von 16 Stunden bei dieser Temperatur durchgeführt. Es wird eine Dispersion erhalten, die einen Feststoffgehalt von 65% aufweist.

### Beispiel 2: Herstellung eines schwach-klebenden Acrylat-Polymers

Es wurde folgende Monomermischung hergestellt:

| | |
|---|---|
| Glycidylmethacrylat | 5 g |
| Ethylenglykoldimethacrylat | 10 g |
| Acrylsäure | 10 g |
| Hydroxypropylmethacrylat | 100 g |
| tert. Butylacrylat | 1000 g |
| 2-Ethyl-hexylacrylat | 8875 g |
| Dilauroylperoxid | 33,3 g |

In einen Reaktionskolben wird entsprechend den Bedingungen gemäß Beispiel 1 das folgende Gemisch gegeben:

| | |
|---|---|
| Wasser | 2000 g |
| Natriumpyrophosphat | 5,6 g |
| Reaktionsprodukt aus 1 Mol Octylphenolpolyglykolether und 1 Mol Maleinsäureanhydrid | 11,8 g |
| Natrium-Sulfobernsteinsäure-di-2-ethylhexylester | 37,1 g |
| Natrium-Vinylbenzolsulfonat | 3,6 g |

Zu dieser Reaktionsmischung werden unter den gleichen Bedingungen wie bei Beispiel 1 1000 g des oben hergestellten Monomerengemisches hinzugegeben. Die Suspensionspolymerisation wird unter den gleichen Bedingungen und für die gleiche Zeitdauer wie bei Beispiel 1 durchgeführt. Danach wird zur Durchführung der Emulsionspolymerisation die folgende Mischung unter Stickstoffatmosphäre hinzugegeben:

| | |
|---|---|
| Monomerengemisch (wie oben angeführt) | 9000 g |
| Wasser | 3330 g |
| Natrium-Pyrophosphat | 33,3 g |
| Reaktionsprodukt aus 1 Mol Octylphenylpolyglykolether und 1 Mol Maleinsäureanhydrid | 300 g |
| Natrium-Sulfobernsteinsäure-di-2-ethyl-hexylester | 80 g |
| Natrium-Vinylbenzolsulfonat | 22,2 g |
| Kaliumpersulfat | 1,3 g |

Unter den gleichen Reaktionsbedingungen wie bei Beispiel 1 wird auch hier die Emulsionspolymerisation durchgeführt. Es wird eine Dispersion erhalten, die einen Feststoffgehalt von 65% aufweist.

Die so erhaltenen Dispersionen werden auf Papier oder Folien als zu beschichtendes Flächengebilde direkt aufgetragen. Nach dem Trocknen ergibt sich ein Trockenauftragsgewicht von z.B. 5-10 g/m². Bei Verwendung des Polymers gemäß Beispiel 1 ergibt sich eine sehr gute und starke Klebewirkung, während bei Verwendung des Polymers gemäß Beispiel 2 eine schwach-klebende Wirkung erzielt wird.

Die Substrate, die mit den Polymeren gemäß Beispiel 2 beschichtet sind, zeigen ihre Klebefähigkeit auch nach wiederholter Ablösung in unverändert guter Form.

## Patentansprüche

1. Selbstklebendes Acrylat-Copolymer, dadurch **gekennzeichnet,** daß es durch kombinierte Suspensions- und Emulsionspolymerisation von Acryl-Monomeren mit gegebenenfalls zusätzlichen copolymerisierbaren Monomeren herstellbar ist, daß das Acrylat-Copolymer in Form von gröberen Teilchen mit einer durchschnittlichen Teilchengröße von 5-50 »m und in Form von feinen Teilchen mit einer durchschnittlichen Teilchengröße von kleiner 0,5 »m vorliegt, und daß das Verhältnis des Anteils in Gew.% des Copolymers in Form der gröberen Teilchen zu dem desjenigen in Form der feineren Teilchen 1 zu 0,1-0,6 ist.

2. Selbstklebendes Acrylat-Copolymer nach Anspruch 1, dadurch **gekennzeichnet,** daß als Acryl-Monomer Acrylsäure oder Methacrylsäure und Esterderivate dieser Säuren oder Mischungen davon eingesetzt sind.

3. Selbstklebendes Acrylat-Copolymer nach Anspruch 1 oder 2, dadurch **gekennzeichnet,** daß als zusätzliche copolymerisierbare Monomere Vinylester und -ether, Maleinsäure-, Fumarsäure- oder Itaconsäurederivate oder Mischungen davon eingesetzt sind.

4. Selbstklebendes Acrylat-Copolymer nach einem der Ansprüche 1 bis 3, dadurch **gekennzeichnet,** daß ein Anteil an zusätzlichem copolymerisierbaren Monomer bis zu 35 Gew.% der Gesamt-Monomeren gewählt wird.

5. Verfahren zur Herstellung eines selbstklebenden Acrylat-Copolymers nach einem der Ansprüche 1 bis 4, **gekennzeichnet** durch eine Kombination aus Suspensions- und Emulsionspolymerisation von Acryl-Monomeren mit gegebenenfalls zusätzlichen copolymerisierbaren Monomeren.

6. Verfahren nach Anspruch 5, dadurch **gekennzeichnet,** daß zuerst die Suspensionspolymerisation und anschließend die begleitende Emulsionspolymerisation durchgeführt wird.

7. Verfahren nach Anspruch 5 oder 6, dadurch **gekennzeichnet,** daß die reine Suspensionspolymerisation bei einer Temperatur von etwa 50-85°C durchgeführt wird.

8. Verfahren nach einem der Ansprüche 5 bis 7, dadurch **gekennzeichnet,** daß die Suspensionspolymerisation durch Zugabe eines organischen Peroxids als öllöslicher Initiator durchgeführt wird.

9. Verfahren nach Anspruch 8, dadurch **gekennzeichnet,** daß das organische Peroxid Dilauroylperoxid oder Dibenzoylperoxid ist.

10. Verfahren nach einem der Ansprüche 5 bis 9, dadurch **gekennzeichnet,** daß die Emulsionspolymerisation durch Zugabe eines wasserlöslichen Initiators zu dem Reaktionssystem durchgeführt wird.

11. Verfahren nach einem der Ansprüche 5 bis 10, dadurch **gekennzeichnet,** daß die begleitende Emulsionspolymerisation bei einer Temperatur von etwa 50-85°C durchgeführt wird.

12. Verfahren nach Anspruch 10 oder 11, dadurch **gekennzeichnet,** daß die begleitende Emulsionspolimerisierung mit den gleichen Monomeren wie die Suspensionspolymerisation durchgeführt wird.

13. Verwendung eines Acrylat-Copolymers nach einem der Ansprüche 1 bis 4 zur Herstellung eines selbstklebenden Flächengebildes.

14. Verwendung nach Anspruch 13 zur Herstellung permanent klebriger, wiederablösbarer Papiere und Folien.

15. Selbstklebendes Flächengebilde mit einem Substrat, dadurch **gekennzeichnet,** daß es auf mindestens einer Seite mit einem Acrylat-Copolymer nach einem der Ansprüche 1 bis 4 versehen ist.

16. Flächengebilde nach Anspruch 15, dadurch **gekennzeichnet,** daß es ein Papier ist.

17. Flächengebilde nach Anspruch 15, dadurch **gekennzeichnet,** daß es eine Folie ist.

18. Flächengebilde nach mindestens einem der Ansprüche 15 bis 17, dadurch **gekennzeichnet,** daß das Flächengebilde das Acrylat-Copolymer in einem gewählten Raster, insbesondere in Punkt- oder Streifenform enthält.

19. Flächengebilde nach einem der Ansprüche 15 bis 18, dadurch **gekennzeichnet,** daß es schwach-klebende Eigenschaften aufweist und daß das Acrylat-Copolymer in einer Menge von 3-20 g/m² Trockengewicht auf das Flächengebilde aufgebracht ist.

20. Flächengebilde nach mindestens einem der Ansprüche 15 bis 18, dadurch **gekennzeichnet,** daß das Flächengebilde stark klebende Eigenschaften aufweist und daß das Acrylat-Copolymer in einer Menge von 20-100 g/m² Trockengewicht aufgetragen ist.

## Claims

1. Self-adhesive acrylate copolymer, characterised in that it can be produced by means of combined suspension and emulsion polymerisation of acrylic monomers optionally with additional copolymerisable monomers, in that the acrylate copolymer exists in the form of coarser particles having an average particle size of 5-50 »m, and in the form of fine particles having an average particle size of less than 0.5 »m, and in that the ratio of the proportion in wt.% of the copolymer in the form of coarser particles to that of those in the form of finer particles is 1 to 0.1-0.6.

2. Self-adhesive acrylate copolymer according to claim 1, characterised in that acrylic acid or methacrylic acid and ester derivatives of these acids or mixtures thereof, are used as the acrylic monomer.

3. Self-adhesive acrylate copolymer according to claim 1 or 2, characterised in that vinyl esters and vinyl ethers, maleic acid derivatives, fumaric acid derivatives or itaconic acid derivatives or mixtures thereof, are used as additional copolymerisable monomers.

4. Self-adhesive acrylate copolymer according to one of claims 1 to 3, characterised in that a proportion of additional copolymerisable monomer up to 35 wt.% of the total monomers is selected.

5. Process for producing a self-adhesive acrylate copolymer according to one of claims 1 to 4, characterised by a combination of suspension and emulsion polymerisation of acrylic monomers optionally with additional copolymerisable monomers.

6. Process according to claim 5, characterised in that suspension polymerisation is carried out initially and then concurrent emulsion polymerisation.

7. Process according to claim 5 or 6, characterised in that pure suspension polymerisation is carried out at a temperature of about 50-85°C.

8. Process according to one of claims 5 to 7, characterised in that suspension polymerisation is carried out by adding an organic peroxide as oil-soluble initiator.

9. Process according to claim 8, characterised in that the organic peroxide is dilauroyl peroxide or dibenzoyl peroxide.

10. Process according to one of claims 5 to 9, characterised in that emulsion polymerisation is carried out by adding a water-soluble initiator to the reaction system.

11. Process according to one of claims 5 to 10, characterised in that concurrent emulsion polymerisation is carried out at a temperature of about 50-85°C.

12. Process according to claim 10 or 11, characterised in that concurrent emulsion polymerisation is carried out using the same monomers as suspension polymerisation.

13. Use of an acrylate copolymer according to one of claims 1 to 4 for producing a self-adhesive surface structure.

14. Use according to claim 13 for producing permanently adhesive, re-releasable papers and films.

15. Self-adhesive surface structure having a substrate, characterised in that it is provided with an acrylate copolymer according to one of claims 1 to 4 on at least one side.

16. Surface structure according to claim 15, characterised in that it is a paper.

17. Surface structure according to claim 15, characterised in that it is a film.

18. Surface structure according to at least one of claims 15 to 17, characterised in that the surface structure contains the acrylate copolymer in a selected pattern, in particular in point form or strip form.

19. Surface structure according to one of claims 15 to 18, characterised in that it has weakly-adhering properties, and in that the acrylate copolymer is applied to the surface structure in an amount from 3-20 g/m² dry weight.

20. Surface structure according to at least one of claims 15 to 18, characterised in that the surface structure has strongly-adhering properties, and in that the acrylate copolymer is applied in an amount from 20-100 g/m² dry weight.

## Revendications

1. Copolymère d'acrylate auto-adhésif, caractérisé en ce qu'on peut le préparer par polymérisation combinée en suspension et en émulsion de monomères acryliques, éventuellement avec des monomères supplémentaires copolymérisables, en ce que le copolymère d'acrylate se présente sous la forme de particules grossières dont la dimension moyenne vaut de 5 à 50 »m et sous forme de particules fines dont la dimension moyenne est inférieure à 0,5 »m, et en ce que le rapport de la proportion pondérale de copolymère sous forme de particules grossières à celle de copolymère sous forme de particules fines vaut de 1/0,1 à 1/0,6.

2. Copolymère d'acrylate auto-adhésif conforme à la revendication 1, caractérisé en ce que l'on utilise, en tant que monomère acrylique, de l'acide acrylique ou de l'acide méthacrylique, des esters de ces acides ou des mélanges de ces monomères.

3. Copolymère d'acrylate auto-adhésif conforme à la revendication 1 ou 2, caractérisé en ce que l'on utilise, en tant que monomères copolymérisables supplémentaires, des esters vinyliques, des éthers vinyliques, des dérivés de l'acide maléique, de l'acide fumarique ou de l'acide itaconique, ou des mélanges de ces monomères.

4. Copolymère d'acrylate auto-adhésif conforme à l'une des revendications 1 à 3, caractérisé en ce que la fraction de monomères copolymérisables supplémentaires représente jusqu'à 35 % du poids total de monomères.

5. Procédé de préparation d'un copolymère d'acrylate auto-adhésif conforme à l'une des revendications 1 à 4, caractérisé par une combinaison d'une polymérisation en suspension et d'une polymérisation en émulsion de monomères acryliques, ainsi que d'éventuels monomères copolymérisables supplémentaires.

6. Procédé conforme à la revendication 5, caractérisé en ce que l'on effectue d'abord la polymérisation en suspension, et ensuite la polymérisation concomitante en émulsion.

7. Procédé conforme à la revendication 5 où 6, caractérisé en ce que la pure polymérisation en suspension est effectuée à une température d'environ 50°C à 85°C.

8. Procédé conforme à l'une des revendications 5 à 7, caractérisé en ce que l'on effectue la polymérisation en suspension en ajoutant un peroxyde organique, en tant qu'amorceur oléosoluble.

9. Procédé conforme à la revendication 8, caractérisé en ce que le peroxyde organique est du peroxyde de dilauroyle ou du peroxyde de dibenzoyle.

10. Procédé conforme à l'une des revendications 5 à 9, caractérisé en ce que l'on effectue la polymérisation en émulsion en ajoutant un amorceur hydrosoluble au système réactionnel.

11. Procédé conforme à l'une des revendications 5 à 10, caractérisé en ce que la polymérisation concomitante en émulsion est effectuée à une température d'environ 50°C à 85°C.

12. Procédé conforme à la revendication 10 ou 11, caractérisé en ce que l'on effectue la polymérisation concomitante en émulsion avec les mêmes monomères que la polymérisation en suspension.

13. Utilisation d'un copolymère d'acrylate conforme à l'une des revendications 1 à 4, pour la préparation d'un produit plat autocollant.

14. Utilisation conforme à la revendication 13, pour la fabrication de papier et de feuilles décollables, mais à adhésivité permanente.

15. Produit plat autocollant comportant un substrat, caractérisé en ce que, sur au moins l'un de ses côtés, il y a un copolymère d'acrylate conforme à l'une des revendications 1 à 4.

16. Produit plat conforme à la revendication 15, caractérisé en ce qu'il s'agit d'un papier.

17. Produit plat conforme à la revendication 15, caractérisé en ce qu'il s'agit d'une feuille.

18. Produit plat conforme à au moins l'une des revendications 15 à 17, caractérisé en ce que le produit plat contient le copolymère d'acrylate selon un dessin choisi, en particulier sous forme de points ou de bandes.

19. Produit plat conforme à l'une des revendications 15 à 18, caractérisé en ce qu'il présente des propriétés de faible adhésion et en ce que le copolymère d'acrylate est déposé sur le produit plat en une quantité correspondant à un poids à sec de 3 à 20 g/m².

20. Produit plat conforme à au moins l'une des revendications 15 à 18, caractérisé en ce que le produit plat présente des propriétés de forte adhésion et en ce que le copolymère d'acrylate est déposé en une quantité correspondant à un poids à sec de 20 à 100 g/m².
